# EUROPEAN PATENT APPLICATION

(11) **EP 4 450 872 A1**
(43) Date of publication of application: **23.10.2024**
(21) Application number: 22907389.5
(22) Date of filing: 09.12.2022
(51) Int. Cl.: F23L 7/00, F23C 9/00, F23G 7/06, F23J 15/00, F23L 9/02

(54) **WASTE INCINERATION FACILITY**

(30) Priority: 14.12.2021 JP 2021202826; 29.03.2022 JP 2022054107
(71) Applicant: Hitachi Zosen Corporation, Osaka-shi, Osaka 559-8559 (JP); Kyoto University, Kyoto-shi, Kyoto 606-8501 (JP)
(72) Inventor: FURUBAYASHI, Michitaka, Osaka-shi, Osaka 559-8559 (JP); YASUI, Yutaka, Osaka-shi, Osaka 559-8559 (JP); NAGAMORI, Toshio, Osaka-shi, Osaka 559-8559 (JP); TOMIYAMA, Shigeo, Osaka-shi, Osaka 559-8559 (JP); UEDA, Masaki, Osaka-shi, Osaka 559-8559 (JP); HARADA, Hiroki, Osaka-shi, Osaka 559-8559 (JP); TAKAOKA, Masaki, Kyoto-shi, Kyoto 606-8501 (JP)
(74) Representative: Grünecker Patent- und Rechtsanwälte PartG mbB
(86) International application number: PCT/JP2022/045526
(87) International publication number: WO 2023/112862

(57) **Abstract**

A waste incineration facility (1) includes an incinerator (3) that incinerates waste, a flue gas passage (4) through which a flue gas discharged from the incinerator (3) flows, a dust collector (42) provided in the flue gas passage (4), a recirculating flue gas line (6) that is connected to a discharge position (P1) located downstream of the dust collector (42) in the flue gas passage (4) and that takes out, as a recirculating flue gas, part of the flue gas flowing through the flue gas passage (4) to supply the recirculating flue gas into the incinerator (3), and an oxygen mixer (68) that mixes the recirculating flue gas flowing through the recirculating flue gas line (6) with a high-concentration oxygen gas that has a higher oxygen concentration than air. Accordingly, it is possible to easily reduce the amount of flue gas.

## Description

### TECHNICAL FIELD

The present invention relates to a waste incineration facility.

### CROSS-REFERENCE TO RELATED APPLICATIONS

This application claims priority benefit of Japanese Patent Applications No. JP2021-202826 filed in the Japan Patent Office on December 14, 2021 and No. JP2022-54107 filed in the Japan Patent Office on March 29, 2022, the entire disclosures of which are incorporated herein by reference.

### BACKGROUND ART

Waste incineration facilities have conventionally taken out part of a flue gas flowing through a flue gas passage as a recirculating flue gas to supply the recirculating flue gas into an incinerator. Use of the recirculating flue gas allows a reduction in the amount of the flue gas discharged from the waste incineration facilities. For example, Japanese Patent Application Laid-Open No. 2003-329228 discloses a waste incinerator that mixes a flue gas with air and blows this oxygen-enriched flue gas into a combustion chamber. Japanese Patent Application Laid-Open No. 2001-241629 discloses combustion equipment that includes nozzles facing each other in a secondary combustion chamber and that blows out oxygen-enriched air from one of the nozzles and blows out a recirculating flue gas from the other nozzle. Japanese Patent No. 3949386 discloses a combustion method that combines local oxygen-enriched combustion and a combustion system for drawing off a combustion gas from the upper space of a post-combustion stoker to recirculate the combustion gas into an incinerator. Japanese Patent Application Laid-Open No. H10-9538 discloses an incineration facility that burns municipal solid waste disposed of into a first combustion furnace by supplying oxygen and recirculates part of a flue gas that has passed through a boiler into the first combustion furnace.

In recent years, there is demand for the ability to further reduce the amount of flue gas discharged from a waste incineration facility. However, in order to secure a necessary amount of oxygen for waste combustion, it is necessary to supply a large amount of flesh air into an incinerator from the outside of the system, and there is a limitation on the available amount of recirculating flue gas. It is thus not easy to reduce the amount of flue gas.

### SUMMARY OF THE INVENTION

The present invention is intended for a waste incineration facility, and it is an object of the present invention to easily reduce the amount of flue gas in a waste incineration facility.

A first aspect of the present invention is a waste incineration facility that includes an incinerator that incinerates waste, a flue gas passage through which a flue gas discharged from the incinerator flows, a dust collector provided in the flue gas passage, a recirculating flue gas line that is connected to a discharge position located downstream of the dust collector in the flue gas passage and that takes out, as a recirculating flue gas, part of the flue gas flowing through the flue gas passage to supply the recirculating flue gas into the incinerator, and an oxygen mixer that mixes the recirculating flue gas flowing through the recirculating flue gas line with a high-concentration oxygen gas that has a higher oxygen concentration than air.

According to the present invention, it is possible to easily reduce the amount of flue gas in the waste incineration facility.

A second aspect of the present invention is the waste incineration facility according to the first aspect, in which the recirculating flue gas that has been mixed with the high-concentration oxygen gas serves as a main gas of a gas for combustion that is supplied via a gas pipe into the incinerator.

A third aspect of the present invention is the waste incineration facility according to the first aspect (or according to the first or second aspect), in which the recirculating flue gas line is connected to a primary combustion chamber and/or a secondary combustion chamber of the incinerator, and the recirculating flue gas that has been mixed with the high-concentration oxygen gas is used as a gas for primary combustion and/or a gas for secondary combustion.

A fourth aspect of the present invention is the waste incineration facility according to the first aspect (or according to any one of the first to third aspects) that further includes a dehydrator that is provided in the recirculating flue gas line and that removes water from the recirculating flue gas.

A fifth aspect of the present invention is the waste incineration facility according to the first aspect (or according to any one of the first to fourth aspects) that further includes a preheater that is provided in the recirculating flue gas line and that heats the recirculating flue gas.

A sixth aspect of the present invention is the waste incineration facility according to any one of the first to fifth aspects that further includes a wet scrubber that is provided between the dust collector and the discharge position in the flue gas passage and that supplies a liquid containing water to the flue gas to remove a predetermined component from the flue gas. The recirculating flue gas flowing through the recirculating flue gas line is heated by heat exchange with the flue gas flowing upstream of the wet scrubber in the flue gas passage.

A seventh aspect of the present invention is the waste incineration facility according to any one of the first to fifth aspects (or according to any one of the first to sixth aspects) that further includes a waste pit that reserves waste that is before being disposed of into the incinerator and a drawn-off gas line through which a gas in the waste pit is drawn off as a drawn-off gas. The oxygen mixer generates the high-concentration oxygen gas from at least part of the drawn-off gas and mixes the high-concentration oxygen gas with the recirculating flue gas flowing through the recirculating flue gas line.

An eighth aspect of the present invention is the waste incineration facility according to the seventh aspect, in which the oxygen mixer generates the high-concentration oxygen gas by condensing oxygen contained in the drawn-off gas and discharges a remainder of the drawn-off gas via a deodorizer to an outside.

A ninth aspect of the present invention is the waste incineration facility according to any one of the first to fifth aspects (or according to any one of the first to eighth aspects) that further includes a carbon dioxide collector that is provided downstream of the discharge position in the flue gas passage and that collects carbon dioxide from the flue gas, and a processed gas line by which at least part of the flue gas that has passed through the carbon dioxide collector is mixed with the recirculating flue gas flowing through the recirculating flue gas line.

A tenth aspect of the present invention is the waste incineration facility according to the ninth aspect, in which the oxygen mixer is provided in the processed gas line and generates the high-concentration oxygen gas from the flue gas that has passed through the carbon dioxide collector, and mixes the high-concentration oxygen gas with the recirculating flue gas flowing through the recirculating flue gas line.

An eleventh aspect of the present invention is the waste incineration facility according to any one of the first to fifth aspects (or according to any one of the first to tenth aspects) that further includes a carbon dioxide utilizer that is provided downstream of the discharge position in the flue gas passage and that generates a predetermined product by using the flue gas.

An twelfth aspect of the present invention is the waste incineration facility according to any one of the first to fifth aspects (or according to any one of the first to sixth aspects) that further includes a waste pit that reserves waste that is before being disposed of into the incinerator, a carbon dioxide collector that is provided downstream of the discharge position in the flue gas passage and that collects carbon dioxide from the flue gas, and a processed gas line by which at least part of the flue gas that has passed through the carbon dioxide collector is supplied as a processed gas to the waste pit and/or the incinerator.

A thirteenth aspect of the present invention is the waste incineration facility according to the twelfth aspect that further includes a drawn-off gas line through which a gas in the waste pit that has received supply of the processed gas is drawn off as a drawn-off gas and supplied into the incinerator, and another oxygen mixer that mixes the drawn-off gas flowing through the drawn-off gas line with a gas that has a higher oxygen concentration than air.

A fourteenth aspect of the present invention is the waste incineration facility according to the twelfth aspect that further includes a drawn-off gas line through which a gas in the waste pit that has received supply of the processed gas is drawn off as a drawn-off gas. The drawn-off gas is mixed with the recirculating flue gas flowing through the recirculating flue gas line.

A fifteenth aspect of the present invention is the waste incineration facility according to the twelfth aspect that further includes a drawn-off gas line through which a gas in the waste pit that has received supply of the processed gas is drawn off as a drawn-off gas. The oxygen mixer generates the high-concentration oxygen gas from at least part of the drawn-off gas and mixes the high-concentration oxygen gas with the recirculating flue gas flowing through the recirculating flue gas line.

A sixteenth aspect of the present invention is the waste incineration facility according to the twelfth aspect (or according to any one of the twelfth to fifteenth aspects), in which the processed gas is supplied into a lower portion of the waste pit from the processed gas line and is supplied into the incinerator after having passed through an accumulated layer of waste in the waste pit.

A seventeenth aspect of the present invention is the waste incineration facility according to the twelfth aspect (or according to any one of the twelfth to sixteenth aspects), in which the waste pit is connected to a platform that has a double-door structure.

An eighteenth aspect of the present invention is the waste incineration facility according to any one of the first to fifth aspects that further includes flue gas treatment equipment that is provided downstream of the dust collector in the flue gas passage and that supplies a liquid containing water to the flue gas to remove a predetermined component from the flue gas, and a separation membrane that removes water from the flue gas that is immediately after having passed through the flue gas treatment equipment.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a block diagram showing a configuration of a garbage incineration facility according to a first embodiment.
Fig. 2 is a diagram showing configurations of a garbage pit and an incinerator.
Fig. 3 is a diagram showing part of a garbage incineration facility according to a second embodiment.
Fig. 4 is a block diagram showing a garbage incineration facility according to a third embodiment.
Fig. 5 is a block diagram showing a garbage incineration facility according to a fourth embodiment.
Fig. 6 is a block diagram showing a garbage incineration facility according to a fifth embodiment.
Fig. 7 is a block diagram showing a garbage incineration facility according to a sixth embodiment.
Fig. 8 is a block diagram showing a garbage incineration facility according to a seventh embodiment.
Fig. 9 is a block diagram showing a garbage incineration facility according to an eighth embodiment.
Fig. 10 is a block diagram showing another example of the garbage incineration facility.
Fig. 11 is a block diagram showing a garbage incineration facility according to a ninth embodiment.
Fig. 12 is a block diagram showing another example of the garbage incineration facility.
Fig. 13 is a block diagram showing a garbage incineration facility according to a tenth embodiment.

### DESCRIPTION OF EMBODIMENTS

### First Embodiment

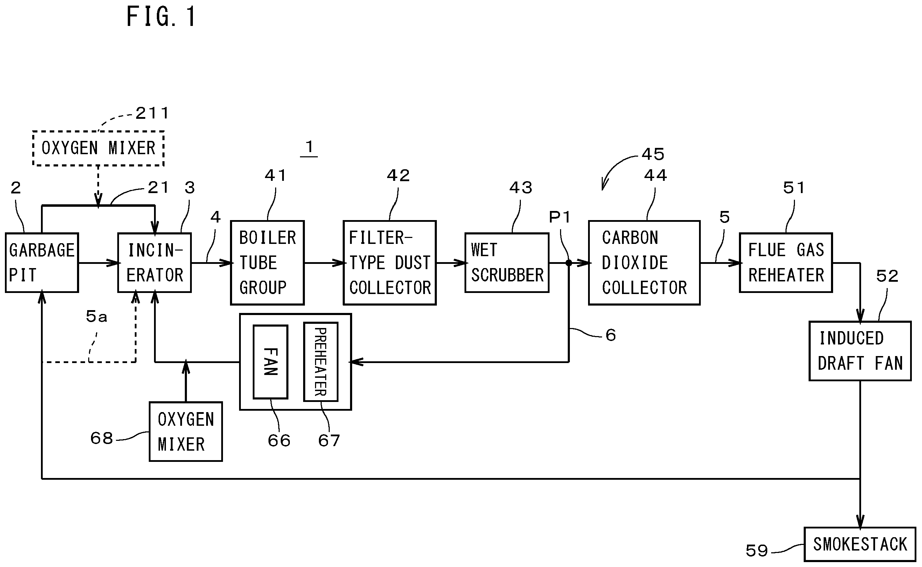

Fig. 1 is a block diagram showing a configuration of a garbage incineration facility 1 according to a first embodiment of the present invention. The garbage incineration facility 1 is a waste incineration facility that includes a garbage pit 2, an incinerator 3, a flue gas passage 4, and a controller (not shown). The controller may, for example, be a computer including constituent elements such as a CPU and is responsible for overall control of the garbage incineration facility 1. The garbage pit 2 is a waste pit and reserves garbage, i.e., waste. The incinerator 3 incinerates garbage that is disposed of from the garbage pit 2. The flue gas passage 4 is a flue through which a flue gas discharged from the incinerator 3 flows. In the example shown in Fig. 1, the flue gas passage 4 is a passage that extends from the incinerator 3 to a carbon dioxide collector 44 which will be described later. In Fig. 1, the reference sign 4 is only given to the arrow between the incinerator 3 and a boiler tube group 41 which will be described later. The details of the garbage pit 2 and the incinerator 3 will be described later.

The garbage incineration facility 1 further includes the boiler tube group 41, a filter-type dust collector 42 (hereinafter, simply referred to as the "dust collector 42"), a wet scrubber 43, and the carbon dioxide collector 44. The boiler tube group 41, the dust collector 42, the wet scrubber 43, and the carbon dioxide collector 44 are provided in the flue gas passage 4 and arranged in order from the upstream side to the downstream side in the direction of flow of the flue gas (i.e., in the direction away from the incinerator 3).

The boiler tube group 41 generates steam by using, as a heat source, the flue gas discharged from the incinerator 3. The dust collector 42 is a so-called bag filter and collects fly ash contained in the flue gas on a filter cloth. Alternatively, a powder agent for flue gas treatment may be supplied to the flue gas on the upstream side of the dust collector 42 and collected together with fly ash by the dust collector 42. The power agent for flue gas treatment is used to remove substances such as sulfur oxides, hydrogen chloride, dioxins, or mercury compounds. The temperature of the flue gas at the outlet of the dust collector 42 may be in the range of, for example, 150°C to 200°C. The flue gas that has passed through the dust collector 42 flows into the wet scrubber 43.

The wet scrubber 43 may, for example, spray a liquid that contains water and an alkaline agent such as caustic soda into the flue gas. This lowers the temperature of the flue gas to a temperature of, for example, 30°C to 70°C and removes substances such as sulfur oxides or hydrogen chloride contained in the flue gas. The water content in the flue gas also decreases with decrease in the temperature of the flue gas. The wet scrubber 43 serves as a desulfurizer that removes sulfur oxides contained in the flue gas, and also serves as a dechlorinator that removes hydrogen chloride contained in the flue gas. The carbon dioxide collector 44 collects carbon dioxide from the flue gas that has passed through the wet scrubber 43. One example of the carbon dioxide collector 44 is equipment that collects carbon dioxide by a chemical absorption method and that includes an absorber and a regenerator. For example, the absorber may spray a liquid that contains amine and water into the flue gas to absorb carbon dioxide into the liquid. That is, carbon dioxide is removed from the flue gas. The liquid that has absorbed carbon dioxide is transmitted to and heated by the regenerator in order to take out and collect carbon dioxide. For example, the collected carbon dioxide may be used to generate methane by methanation, or may be reserved in the ground or the like (carbon dioxide capture, utilization, and storage: CCUS). The garbage incineration facility 1 that includes a recirculating flue gas line 6, which will be described later, can easily achieve CCUS because the flue gas has a high carbon dioxide concentration. Alternatively, the carbon dioxide collector 44 may be equipment that collects carbon dioxide by a different method other than the chemical absorption method.

As described above, the wet scrubber 43 and the carbon dioxide collector 44 serve as flue gas treatment equipment 45 that supplies a liquid containing water to the flue gas that has passed through the dust collector 42, and removes a predetermined component from the flue gas. In the following description, the flue gas that has passed through the wet scrubber 43 and the carbon dioxide collector 44 (i.e., the flue gas treatment equipment 45) is referred to as a "processed gas." The processed gas in the garbage incineration facility 1 is a gas that contains large amounts of water, oxygen, and nitrogen.

The garbage incineration facility 1 further includes a processed gas line 5, a flue gas reheater 51, and an induced draft fan 52. The processed gas line 5 is a passage through which the processed gas discharged from the carbon dioxide collector 44 flows. The processed gas line 5 branches off into two lines, one of which is connected to the garbage pit 2 and the other of which is connected to a smokestack 59. The flue gas reheater 51 and the induced draft fan 52 are provided in the processed gas line 5 and arranged in order from the upstream side to the downstream side in the direction of flow of the processed gas (i.e., in the direction away from the carbon dioxide collector 44). In the example shown in Fig. 1, the aforementioned branch point in the processed gas line 5 is located downstream of the induced draft fan 52. In Fig. 1, the reference sign 5 is given to only the arrow between the carbon dioxide collector 44 and the flue gas reheater 51.

The flue gas reheater 51 may, for example, heat the processed gas by using steam released from a boiler (boiler tube group 41) as a heating medium. This suppresses the condensation of water in the processed gas line 5. As a result, it is possible to prevent an acid gas such as sulfur oxides or hydrogen chloride contained in the processed gas from dissolving in condensed water and corroding the tube wall of the processed gas line 5. The induced draft fan 52 forms the flow of gas from the upstream side to the downstream side in both of the flue gas passage 4 and the processed gas line 5 (i.e., the flow of gas from the incinerator 3 via, for example, the dust collector 42 or the carbon dioxide collector 44 to the garbage pit 2 or the smokestack 59). Part of the processed gas that has passed through the carbon dioxide collector 44, the flue gas reheater 51, and the induced draft fan 52 is supplied to the garbage pit 2, and the remainder of the processed gas is discharged from the smokestack 59 to the outside. The branch point in the processed gas line 5 may be provided upstream of the induced draft fan 52. In this case, a fan may be provided between the branch point and the garbage pit 2 in the processed gas line 5. The garbage incineration facility 1 may include, for example, a reducing agent supplier that ejects a reducing agent such as ammonia water into the incinerator 3 so as to conduct a selective non-catalytic reduction process (SNCR). The flue gas that has passed through the carbon dioxide collector 44 usually has a higher oxygen concentration than air, and may be discharged into the soil or to the rooftop of a facility in which the garbage incineration facility 1 is installed. The processed gas may also be returned into the incinerator 3 so that surplus oxygen contained in the processed gas that has passed through the carbon dioxide collector 44 can be used again in combustion.

The garbage incineration facility 1 further includes the recirculating flue gas line 6, a fan 66, a preheater 67, and an oxygen mixer 68. The recirculating flue gas line 6 is a passage through which a recirculating flue gas described later flows, and one end of the recirculating flue gas line 6 is connected to a discharge position P1 that is located downstream of the dust collector 42 in the flue gas passage 4. In the example shown in Fig. 1, the discharge position P1 is a position located between the wet scrubber 43 and the carbon dioxide collector 44. The recirculating flue gas line 6 takes out, as a recirculating flue gas, part of the flue gas flowing through the flue gas passage 4. Since the carbon dioxide collector 44 described previously is located downstream of the discharge position P1 in the flue gas passage 4, the recirculating flue gas taken out at the discharge position P1 has a high carbon dioxide concentration and a low oxygen concentration. The other end of the recirculating flue gas line 6 is connected to the incinerator 3 so as to supply the recirculating flue gas into the incinerator 3. In Fig. 1, the reference sign 6 is only given to the arrow connected to the discharge position P1.

The fan 66 and the preheater 67 are provided in the recirculating flue gas line 6. In one example of the garbage incineration facility 1, the preheater 67 and the fan 66 are provided in order from the upstream side to the downstream side along the flow of the recirculating flue gas (i.e., in the direction away from the discharge position P1). Alternatively, the facility may use two preheaters (first and second preheaters), and the first preheater, the fan 66, and the second preheater may be arranged in order from the upstream side to the downstream side. The order of the fan 66 and the preheater 67 in the recirculating flue gas line 6 may be determined arbitrarily.

The fan 66 forms a flow of the recirculating flue gas from the upstream side to the downstream side in the recirculating flue gas line 6. The preheater 67 may, for example, be capable of heating the recirculating flue gas by using, as a heating medium, steam released from a boiler (boiler tube group 41). The preheater 67 may be configured to heat the recirculating flue gas only when necessary.

The oxygen mixer 68 is equipment that generates a gas having a higher oxygen concentration (volume concentration) than air (hereinafter, simply referred to as a "high-concentration oxygen gas") from the air and may, for example, be a PSA oxygen gas generator. The high-concentration oxygen gas generated by the oxygen mixer 68 is mixed with the recirculating flue gas in the recirculating flue gas line 6. In the example of the case in which there are the first preheater, the fan 66, and the second preheater, the high-concentration oxygen gas is mixed at any point between the fan 66 and the second preheater. By the mixture with the high-concentration oxygen gas, the recirculating flue gas is made to have a higher oxygen concentration than the flue gas at the discharge position P1 and supplied into the incinerator 3. The high-concentration oxygen gas has an oxygen concentration that is sufficiently higher than air. For example, the oxygen concentration may be higher than or equal to 50 vol%, preferably higher than or equal to 65 vol%, more preferably higher than or equal to 80 vol%, and yet more preferably 100%. The high-concentration oxygen gas may be generated from a substance other than air. For example, the high-concentration oxygen gas may be generated by the electrolysis of water.

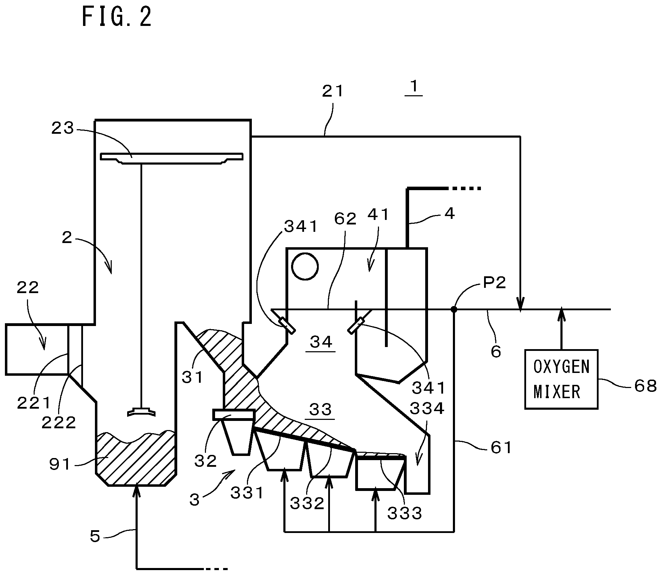

Fig. 2 is a diagram showing configurations of the garbage pit 2 and the incinerator 3. As described previously, the garbage pit 2 reserves garbage and has an accumulated layer 91 of garbage (hereinafter, referred to as the "garbage accumulated layer 91") formed therein. The processed gas line 5 described previously is connected into the lower portion of the garbage pit 2. The lower portion of the garbage pit 2 includes the bottom and the side portion that is located below a platform 22. In one example of the garbage pit 2, the side portion has a gas port for the processed gas. Alternatively, the garbage pit 2 may have a gas port that opens toward a bottom surface. The processed gas supplied from the processed gas line 5 into the garbage pit 2 passes through the garbage accumulated layer 91 provided in the garbage pit 2 and spreads upward. That is, the processed gas is dispersed into an infinite number of interstices of the garbage in the garbage accumulated layer 91 and reaches the top of the garbage accumulated layer 91. Thus, in the space above the garbage accumulated layer 91, the flow of gas becomes gentle. Moreover, substances such as an acid gas contained in the processed gas is dissolved in the water contained in the garbage and is removed from the processed gas.

The upper portion of the garbage pit 2 is connected to one end of a drawn-off gas line 21 which serves as a gas passage. The upper portion of the garbage pit 2 includes the ceiling and the side portion that is located above an input port of a feed hopper 31 described later in the incinerator 31. The drawn-off gas line 21 is provided with a fan which is not shown. Thus, the gas in the garbage pit 2 is drawn off as a drawn-off gas from the drawn-off gas line 21. The gas in the garbage pit 2 includes the processed gas that has passed through the garbage accumulated layer 91 and air that flows into the garbage pit 2 from an input door of the platform 22. In the garbage pit 2, the internal pressure is a negative pressure lower than atmospheric pressure and prevents leakage of odor in the garbage pit 2 to the outside.

As described previously, since substances such as an acid gas contained in the processed gas are removed via the garbage accumulated layer 91, corrosion of the tube wall of the drawn-off gas line 21 is prevented even if the water in the drawn-off gas condenses in the drawn-off gas line 21. As will be described later, in the example shown in Fig. 2, the other end of the drawn-off gas line 21 is connected to the recirculating flue gas line 6. The drawn-off gas line 21 may further include a preheater.

In the preferable garbage incineration facility 1, the garbage pit 2 is connected to the platform 22 that has a double-door structure. Specifically, the platform 22 where a garbage truck stops includes an outside door 221 and an inside door 222 between the garbage pit 2 and the platform 22. When garbage is disposed of from the garbage truck into the garbage pit 2, the outside door 221 is opened with the inside door 222 closed, so as to allow the garbage to be disposed of from the garbage truck. The garbage is temporarily reserved between the inside door 222 and the outside door 221. After the garbage is disposed of from the garbage truck, the outside door 221 is closed and then the inside door 222 is opened. In this way, the garbage is disposed of into the garbage pit 2. After the garbage is disposed of into the garbage pit 2, the inside door 222 is closed. The aforementioned double-door structure allows a reduction in the amount of the air flowing into the garbage pit 2.

The incinerator 3 includes the feed hopper 31, a garbage supplier 32, a primary combustion chamber 33, and a secondary combustion chamber 34. The feed hopper 31 receives the garbage that is disposed of from the garbage pit 2 by a garbage crane 23. The garbage supplier 32 may include, for example, a pusher or a screw feeder and supplies garbage from the bottom of the feed hopper 31 into the primary combustion chamber 33.

The primary combustion chamber 33 includes a drying grate 331, a combustion grate 332, a post-combustion grate 333, and a discharge port 334 aligned at the bottom in order in a direction away from the garbage supplier 32. In the drying grate 331, the combustion grate 332, and the post-combustion grate 333, the garbage is transported from the side of the garbage supplier 32 toward the discharge port 334 by a common transport operation. In each of the drying grate 331, the combustion grate 332, and the post-combustion grate 333, a gas for primary combustion described later is ejected toward the inside of the primary combustion chamber 33 to burn the garbage that is under transport. The burnt garbage (mainly, ash) is discharged via the discharge port 334 to the outside of the primary combustion chamber 33.

The secondary combustion chamber 34 is a space surrounded by the side wall and is continuous directly from the primary combustion chamber 33 to form a passage of the flue gas discharged from the primary combustion chamber 33. In the example shown in Fig. 2, the secondary combustion chamber 34 is a space that extends upward and has a passage area that is sufficiently smaller than the floor area of the primary combustion chamber 33. The side wall of the secondary combustion chamber 34 is provided with a plurality of nozzles 341 from which a gas for secondary combustion described later is ejected. This gas helps burning an unburnt gas generated in the primary combustion chamber 33. The secondary combustion chamber 34 is part of the incinerator 3, and a downstream passage from the outlet of the secondary combustion chamber 34 serves as the flue gas passage 4 described previously. In Fig. 2, the reference sign 41 is given to a region where the boiler tube group 41 is provided.

In the example shown in Fig. 2, the recirculating flue gas line 6 branches off into a gas line 61 for primary combustion and a gas line 62 for secondary combustion at a branch point P2 that is located downstream of the position of mixture with the high-concentration oxygen gas by the oxygen mixer 68 (on the side of the incinerator 3). The gas line 61 for primary combustion branches off into a plurality of lines that are connected respectively to wind boxes of the drying grate 331, the combustion grate 332, and the post-combustion grate 333. The gas line 62 for secondary combustion branches off into a plurality of lines that are connected respectively to the plurality of nozzles 341.

The drawn-off gas line 21 is connected to a position that is located upstream of the branch point P2 in the recirculating flue gas line 6. Thus, the recirculating flue gas mixed with the high-concentration oxygen gas is further mixed with the drawn-off gas from the garbage pit 2. The resultant mixed gas of the recirculating flue gas, the high-concentration oxygen gas, and the drawn-off gas flows into the gas line 61 for primary combustion and the gas line 62 for secondary combustion. In the following description, the gas flowing through the gas line 61 for primary combustion is referred to as a "gas for primary combustion," and the gas flowing through the gas line 62 for secondary combustion is referred to as a "gas for secondary combustion." The gas for primary combustion is supplied from the drying grate 331, the combustion grate 332, and the post-combustion grate 333 into the primary combustion chamber 33. The gas for secondary combustion is supplied from the nozzles 341 into the secondary combustion chamber 34.

The gas for primary combustion and the gas for secondary combustion may have oxygen concentrations of, for example, lower than or equal to 30 vol% and typically lower than or equal to 25 vol%. These oxygen concentrations may, for example, be higher than 0 vol% and preferably higher than or equal to 3 vol%. The oxygen concentrations in the gas for primary combustion and the gas for secondary combustion in the example shown in Fig. 2 are adjustable, for example, by changing the mixture ratio of the recirculating flue gas, the high-concentration oxygen gas, and the drawn-off gas or by changing the oxygen concentration in the high-concentration oxygen gas. Besides, the oxygen concentration in each of the gas for primary combustion and the gas for secondary combustion are separately adjustable. In this case, for example, piping design may be changed, and also devices such as a damper and a flowmeter may be provided in order to enable separately changing the mixture ratio of the recirculating flue gas, the high-concentration oxygen gas, and the drawn-off gas in each of the gas line 61 for primary combustion and the gas line 62 for secondary combustion. Moreover, the oxygen concentration in the gas for primary combustion in each of the drying grate 331, the combustion grate 332, and the post-combustion grate 333 may also be separately adjustable. Similarly, the oxygen concentration in the gas for secondary combustion in each of the nozzles 341 may also be separately adjustable. The garbage incineration facility 1 may include a plurality of mixers so as to independently make variable the mixture ratio of the recirculating flue gas, the high-concentration oxygen gas, and the drawn-off gas and to supply such gases into the incinerator 3.

As described above, the preferable garbage incineration facility 1 includes the recirculating flue gas line 6 that takes out, as the recirculating flue gas, part of the flue gas flowing through the flue gas passage 4 to supply the recirculating flue gas into the incinerator 3, and the oxygen mixer 68 that mixes the recirculating flue gas flowing through the recirculating flue gas line 6 with a gas having a higher oxygen concentration than air (the aforementioned high-concentration oxygen gas). In the garbage incineration facility 1, the recirculating flue gas mixed with the high-concentration oxygen gas is used as the gas for combustion in the incinerator 3. This can increase the amount of the recirculating flue gas taken out from the flue gas passage 4 as compared to the case where the recirculating flue gas is mixed with air. As a result, it is possible to easily reduce the amount of the flue gas flowing downstream of the position of connection (i.e., the discharge position P1) at which the recirculating flue gas line 6 is connected to the flue gas passage 4. Besides, by continuing the operation while reducing the amount of air (in particular, nitrogen) supplied from the outside of the system into the incinerator 3 to a minimum, it is possible to gradually reduce the amount of nitrogen contained in the flue gas and to make carbon dioxide, water, and surplus oxygen become the main components of the flue gas passing through the carbon dioxide collector 44. During this operation, since the concentration of carbon dioxide contained in the flue gas increases, it is possible to efficiently separate carbon dioxide in the carbon dioxide collector 44. During this operation, in the wet scrubber 43, the amount of water contained in the flue gas decreases with a drop in the temperature of the flue gas, and therefore it is also possible to remove the water contained in the recirculating flue gas.

Preferably, the recirculating flue gas line 6 may be connected to the primary connection chamber 33 and the secondary combustion chamber 34 of the incinerator 3, and the recirculating flue gas mixed with the high-concentration oxygen gas may be used as the gas for primary combustion and the gas for secondary combustion. This more reliably increases the amount of usage of the recirculating flue gas and accordingly further reduces the amount of the flue gas flowing downstream of the discharge position P1 in the flue gas passage 4. In the garbage incineration facility 1, the recirculating flue gas line 6 may be connected only to the primary combustion chamber 33 or only to the secondary combustion chamber 34. Even in this case, it is possible to secure a certain degree of usage of the recirculating flue gas and to reduce the amount of flue gas. As described above, in the garbage incineration facility 1, it is preferable that the recirculating flue gas line 6 may be connected to the primary combustion chamber 33 and/or the secondary combustion chamber 34 of the incinerator, and the recirculating flue gas mixed with the high-concentration oxygen gas may be used as the gas for primary combustion and/or the gas for secondary combustion. In the garbage incineration facility 1, it is preferable that the amount of air supplied from the outside of the system into the incinerator 3 may be reduced to a minimum. That is, when the facility is in operation, it is preferable to eliminate the air supplied from the outside of the system into the incinerator 3, except for the air flowing into the incinerator 3 such as the air flowing into the garbage pit 2 from the entrance door or the like of the platform 22, the air purged in equipment, the air for cooling equipment, or the air taken in with the garbage. During the initial operation, air may be supplied from the outside of the system into the incinerator 3.

Preferably, the garbage incineration facility 1 may include the preheater 67 that is provided in the recirculating flue gas line 6 and that heats the recirculating flue gas. Accordingly, it is possible to heat the recirculating flue gas to a temperature suitable for use as the gas for combustion.

Preferably, the garbage incineration facility 1 may include the garbage pit 2 that reserves garbage that is before being disposed of into the incinerator 3, the carbon dioxide collector 44 that is located downstream of the dust collector 42 in the flue gas passage 4 and that collects carbon dioxide from the flue gas, and the processed gas line 5 by which the flue gas that has passed through the carbon dioxide collector 44 is supplied as the processed gas to the garbage pit 2. This reduces the amount of the flue gas discharged from the smokestack 59 to the outside in the garbage incineration facility 1.

Preferably, the processed gas may be supplied from the processed gas line 5 into the lower portion of the garbage pit 2, and the processed gas that has passed through the garbage accumulated layer 91 in the garbage pit 2 may be supplied into the incinerator 3. Here, if the processed gas is ejected from the position above the garbage accumulated layer 91 in the garbage pit 2, a strong flow of gas will occur in the garbage pit 2 and makes it difficult to perform pressure control for maintaining the garbage pit 2 under a constant negative pressure. In contrast, the garbage incineration facility 1 in which the processed gas is ejected from the lower portion of the garbage pit 2 is capable of alleviating the flow of the processed gas in the garbage pit 2 and to ease the pressure control for maintaining the garbage pit 2 under a negative pressure. Besides, the garbage accumulated layer 91 removes substances such as an acid gas contained in the processed gas. This reduces the occurrence of corrosion in the line by which the gas in the garbage pit 2 is drawn off (i.e., the drawn-off gas line 21).

Preferably, the garbage incineration facility 1 may include the drawn-off gas line 21 that is connected to the upper portion of the garbage pit 2 and by which the gas in the garbage pit 2 is drawn off as the drawn-off gas, and the drawn-off gas may be mixed with the recirculating flue gas flowing through the recirculating flue gas line 6. This allows the processed gas filling the garbage pit 2 to be used appropriately as the gas for combustion in the incinerator 3.

### Second Embodiment

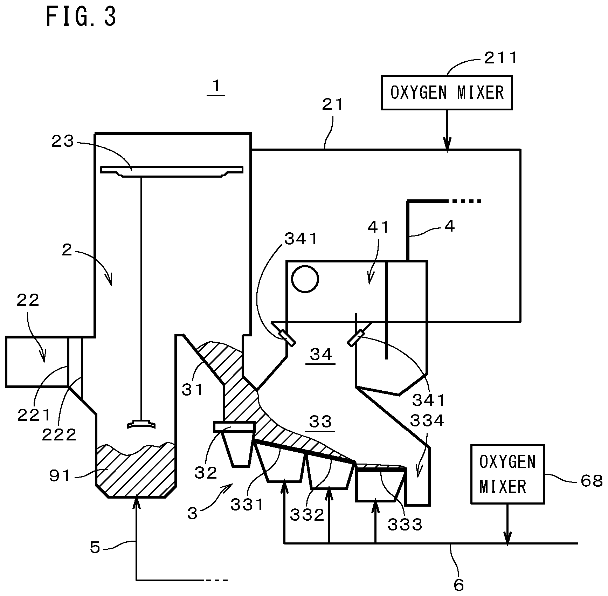

Fig. 3 is a diagram showing part of a garbage incineration facility 1 according to a second embodiment of the present invention and corresponding to Fig. 2. The garbage incineration facility 1 shown in Fig. 3 differs from that shown in Fig. 1 in the configurations of the recirculating flue gas line 6 and the drawn-off gas line 21 in which the recirculating flue gas and the drawn-off gas are separately supplied into the incinerator 3. The other configuration is the same as that shown in Fig. 1, and constituent elements that are identical to those in Fig. 1 are given the same reference signs.

The recirculating flue gas line 6 is connected as a gas line for primary combustion to the wind boxes of the drying grate 331, the combustion grate 332, and the post-combustion grate 333. The recirculating flue gas that has been mixed with the high-concentration oxygen gas by the oxygen mixer 68 is supplied as the gas for primary combustion into the primary combustion chamber 33. The drawn-off gas line 21 is connected as a gas line for secondary combustion to the nozzles 341. The garbage incineration facility 1 includes an oxygen mixer 211 (indicated by a dashed block in Fig. 1) that is similar to the oxygen mixer 68, and the gas generated by the oxygen mixer 211 and having a higher oxygen concentration than air (i.e., a high-concentration oxygen gas) is mixed with the drawn-off gas flowing through the drawn-off gas line 21. Accordingly, the drawn-off gas having a higher oxygen concentration than the processed gas supplied to the garbage pit 2 is supplied as the gas for secondary combustion into the secondary combustion chamber 34. In the garbage incineration facility 1 shown in Fig. 3, it is possible to separately set the oxygen concentration in the gas for primary combustion and the oxygen concentration in the gas for secondary combustion (e.g., set the oxygen concentrations to different values) with ease.

Fig. 3 is merely one example, and all or some of the drying grate 331, the combustion grate 332, and the post-combustion grate 333 may be connected to the drawn-off gas line 21. Similarly, all or some of the nozzles 341 may be connected to the recirculating flue gas line 6.

As described above, the garbage incineration facility 1 shown in Fig. 3 includes the drawn-off gas line 21 that is connected to the upper portion of the garbage pit 2 and through which the gas in the garbage pit 2 is drawn off as the drawn-off gas and supplied into the incinerator 3, and the oxygen mixer 211 that mixes the drawn-off gas flowing through the drawn-off gas line 21 with a high-concentration oxygen gas having a higher oxygen concentration than air. Accordingly, it is possible to appropriately use the processed gas, which fills the garbage pit 2, as the gas for combustion in the incinerator 3.

In the garbage incineration facility 1 described above, while the flue gas from which carbon dioxide has been removed by the carbon dioxide collector 44 is supplied as the processed gas to the garbage pit 2, a processed gas line 5a as indicated by a broken line in Fig. 1 may be connected to the incinerator 3 to supply the processed gas directly into the incinerator 3. In this case, the processed gas may preferably be used as the gas for primary combustion and/or the gas for secondary combustion. As another alternative, the processed gas may be mixed with the recirculating flue gas, and the oxygen mixer 211 may be provided in the processed gas line 5a to mix the processed gas supplied into the incinerator 3 with the high-concentration oxygen gas. The processed gas may be distributed to the garbage pit 2 and the incinerator 3. As described above, the garbage incineration facility 1 may preferably include the processed gas line 5 by which the flue gas that has passed through the carbon dioxide collector 44 is supplied as the processed gas to the garbage pit 2 and/or the incinerator 3. This reduces the amount of the flue gas discharged from the smokestack 59 to the outside.

### Third Embodiment

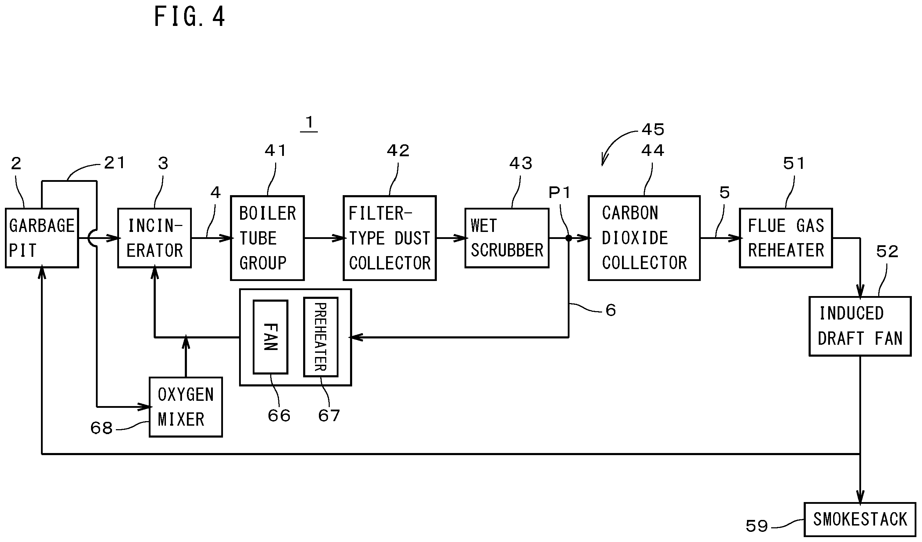

Fig. 4 is a block diagram showing a garbage incineration facility 1 according to a third embodiment of the present invention. In the garbage incineration facility 1 shown in Fig. 4, the oxygen mixer 68 is connected to the drawn-off gas line 21. The other configuration is the same as that shown in Fig. 1, and constituent elements that are identical to those in Fig. 1 are given the same reference signs. In the garbage incineration facility 1 shown in Fig. 4, the drawn-off gas that is drawn off from the garbage pit 2 is supplied through the drawn-off gas line 21 to the oxygen mixer 68. The oxygen mixer 68 generates a high-concentration oxygen gas from all or part of the supplied drawn-off gas. The high-concentration oxygen gas is mixed with the recirculating flue gas flowing through the recirculating flue gas line 6 and supplied to the incinerator 3. As described above, the oxygen mixer 68 shown in Fig. 4 generates the high-concentration oxygen gas from at least part of the drawn-off gas. Then, the high-concentration oxygen gas is mixed with the recirculating flue gas and used as the gas for combustion in the incinerator 3. This considerably reduces the amount of the flue gas discharged from the smokestack 59.

In the oxygen mixer 68, the high-concentration oxygen gas may be generated from part of the drawn-off gas, and the high-concentration oxygen gas may be mixed with the remainder of the drawn-off gas flowing through the drawn-off gas line 21 and supplied to the incinerator 3 (see Fig. 3). Note that if the oxygen mixer 68 is a PSA oxygen gas generator, a gas that is adsorbed on an adsorbent during generation of the high concentration gas (i.e., a gas such as a nitrogen gas other than the oxygen gas) is released into the atmosphere after being deodorized by a deodorizer that includes, for example, a layer of activated carbon.

### Fourth Embodiment

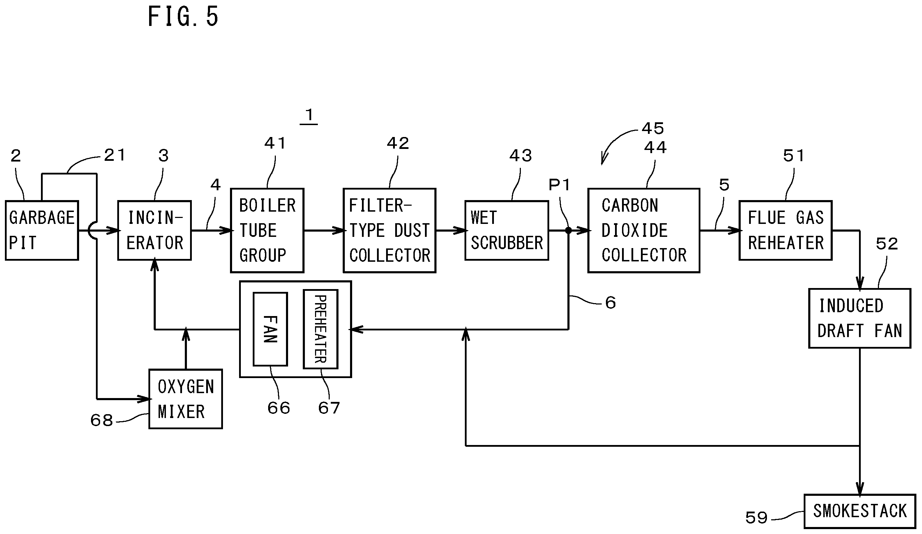

Fig. 5 is a block diagram showing a garbage incineration facility 1 according to a fourth embodiment of the present invention. In the garbage incineration facility 1 shown in Fig. 5, the processed gas line 5 is connected to the recirculating flue gas line 6. The other configuration is the same as that shown in Fig. 1, and constituent elements that are identical to those in Fig. 1 are given the same reference signs. In the garbage incineration facility 1 shown in Fig. 5, the processed gas discharged from the carbon dioxide collector 44 is supplied through the processed gas line 5 to the recirculating flue gas line 6. That is, the processed gas is mixed with the recirculating flue gas flowing through the recirculating flue gas line 6 and supplied through the recirculating flue gas line 6 to the incinerator 3. In the example shown in Fig. 5, similarly, it is also possible to reduce the amount of the flue gas discharged from the smokestack 59 to the outside. As described previously, the branch point in the processed gas line 5 may be provided upstream of the induced draft fan 52. Moreover, the position at which the processed gas line 5 is connected to the recirculating flue gas line 6 may be determined arbitrarily. Note that the oxygen mixer 68 shown in Fig. 5 generates the high-concentration oxygen gas from the air flowing into the garbage pit 2.

### Fifth Embodiment

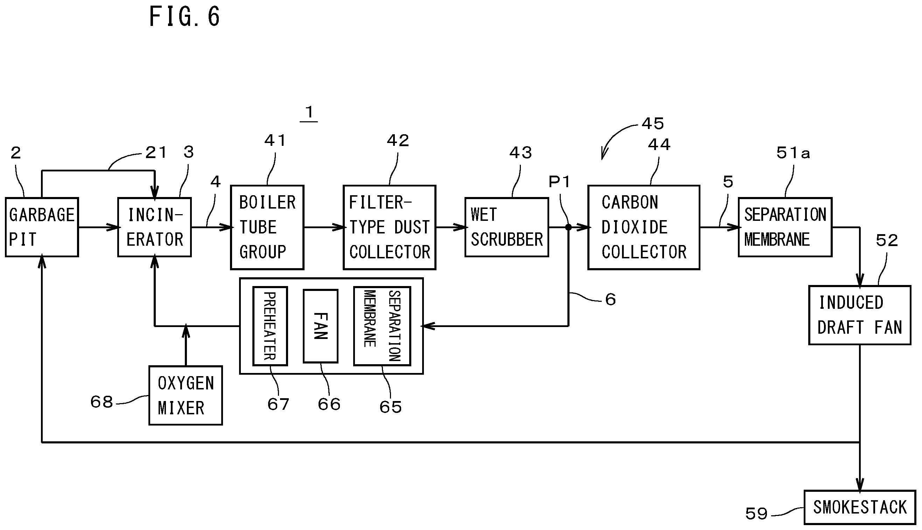

Fig. 6 is a block diagram showing a garbage incineration facility 1 according to a fifth embodiment of the present invention. In the garbage incineration facility 1 shown in Fig. 6, a separation membrane 51a is provided instead of the flue gas reheater 51 in the processed gas line 5, and a separation membrane 65 is provided in the recirculating flue gas line 6. The other configuration is the same as that shown in Fig. 1, and constituent elements that are identical to those in Fig. 1 are given the same reference signs.

The separation membrane 51a serves as a dehydration membrane and may, for example, be an amorphous silica membrane. The separation membrane 51a may be a dehydration membrane of any other type. The separation membrane 51a is arranged at a position that is located immediately downstream of the flue gas treatment equipment 45 in the processed gas line 5. The separation membrane 51a removes water from the processed gas that is immediately after having passed through the flue gas treatment equipment 45. By lowering the humidity of the processed gas, it is possible to suppress the condensation of water in the processed gas line 5, which may be caused by a temperature drop of the processed gas. As a result, it is possible to reduce the occurrence of corrosion of the tube wall of the processed gas line 5, which may be caused as a result of an acid gas such as a sulfur oxide or hydrogen chloride in the processed gas dissolving in condensed water. The separation membrane 51a may also remove other components together with water from the processed gas.

The separation membrane 65 serves as a dehydrator and may, for example, be an amorphous silica membrane. The separation membrane 65 may be a dehydration membrane of any other type. The separation membrane 65 is provided at an arbitrary position in the recirculating flue gas line 6. The separation membrane 65 removes water from the recirculating flue gas. This suppresses the condensation of water and the corrosion of the tube wall in the recirculating flue gas line 6. The separation membrane 65 may also remove other components such as an acid gas together with water from the recirculating flue gas.

As described above, the garbage incineration facility 1 shown in Fig. 6 includes the flue gas treatment equipment 45 (the wet scrubber 43 and the carbon dioxide collector 44 in Fig. 6) that is provided downstream of the dust collector 42 in the flue gas passage 4 and that supplies a liquid containing water to the flue gas to remove a predetermined component from the flue gas, and the separation membrane 51a that removes water from the flue gas that is immediately after having passed through the flue gas treatment equipment 45. This reduces the occurrence of corrosion, which may be caused by the condensation of water on the downstream side of the flue gas treatment equipment 45 that performs wet processing. Besides, by lowering the humidity of the processed gas through the separation membrane 51a, it is also possible to more efficiently dry the garbage in the garbage pit 2 with the processed gas.

The garbage incineration facility 1 includes the dehydrator (the separation membrane 65 in Fig. 6) that is provided in the recirculating flue gas line 6 and that removes water from the recirculating flue gas. This more reliably suppresses the condensation of water in the recirculating flue gas and reduces the occurrence of corrosion which may be caused by the condensation of water in the recirculating flue gas line 6. Depending on the design of the garbage incineration facility 1, the dehydrator may be other than the separation membrane 65. In the flue gas passage 4, the wet scrubber 43 is provided between the dust collector 42 and the discharge position P1 (at a position immediately upstream of the discharge position P1 shown in Fig. 6). The wet scrubber 43 is capable of not only reducing the concentration of an acid gas but also reducing the absolute amount of water contained in the flue gas which may be caused by a drop in the temperature of the flue gas.

### Sixth Embodiment

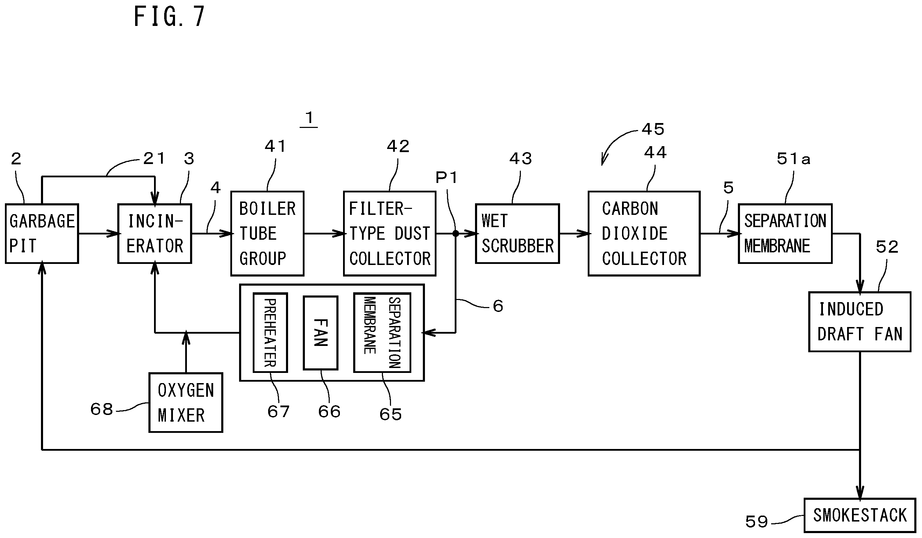

Fig. 7 is a block diagram showing a garbage incineration facility 1 according to a sixth embodiment of the present invention. In the garbage incineration facility 1 shown in Fig. 7, the discharge position P1 connected to the recirculating flue gas line 6 is provided between the dust collector 42 and the wet scrubber 43 in the flue gas passage 4. The other configuration is the same as that shown in Fig. 6, and constituent elements that are identical to those in Fig. 6 are given the same reference signs.

In the garbage incineration facility 1 shown in Fig. 7, the recirculating flue gas line 6 takes out, as the recirculating flue gas, part of the flue gas that is immediately after having passed through the dust collector 42 in the flue gas passage 4. In the recirculating flue gas line 6, the separation membrane 64 removes water from the recirculating flue gas to lower the humidity of the recirculating flue gas. This suppresses the condensation of water in the recirculating flue gas line 6, which may be caused by a temperature drop in the recirculating flue gas. As a result, it is possible to reduce the occurrence of corrosion of the tube wall of the recirculating flue gas line 6 which may be caused as a result of an acid gas such as sulfur oxide or hydrogen chloride in the recirculating flue gas dissolving in condensed water. The separation membrane 65 may further remove other components together with water from the recirculating flue gas.

As is the case of the aforementioned garbage incineration facilities 1, the recirculating flue gas is mixed with the high-concentration oxygen gas generated by the oxygen mixer 68 to obtain the recirculating flue gas having a higher oxygen concentration than the flue gas at the discharge position P1. The recirculating flue gas line 6 is connected to the primary combustion chamber 33 and/or the secondary combustion chamber 34 of the incinerator 3, and the recirculating flue gas is used as the gas for primary combustion and/or the gas for secondary combustion.

As described above, the garbage incineration facility 1 shown in Fig. 7 also uses the recirculating flue gas mixed with the high-concentration oxygen gas as the gas for combustion in the incinerator 3. This can increase the amount of the recirculating flue gas taken out from the flue gas passage 4 as compared to the case where the recirculating flue gas is mixed with air. As a result, it is possible to easily reduce the amount of the flue gas flowing downstream of the position of connection (i.e., the discharge position P1) at which the recirculating flue gas line 6 is connected to the flue gas passage 4. In the garbage incineration facilities 1 shown in Figs. 1 to 5, the discharge position P1 may be provided between the dust collector 42 and the wet scrubber 43.

### Seventh Embodiment

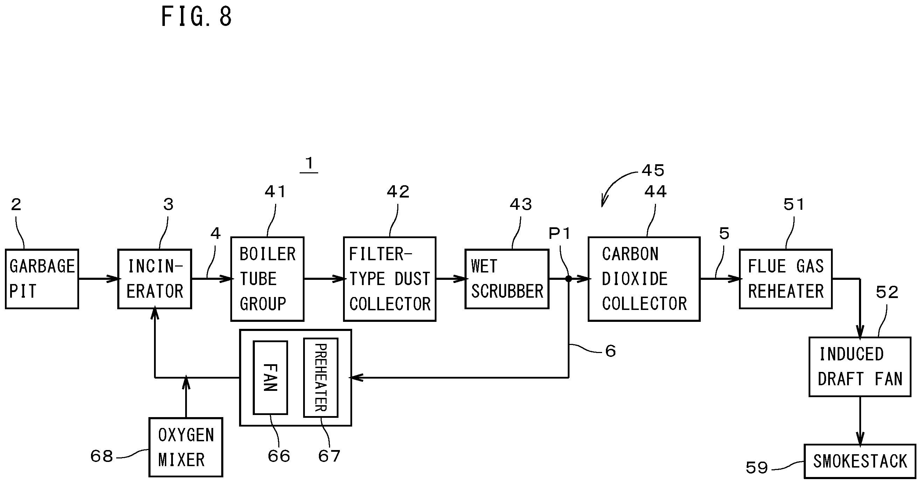

Fig. 8 is a block diagram showing a garbage incineration facility 1 according to a seventh embodiment of the present invention. In the garbage incineration facility 1 shown in Fig. 8, all of the flue gas that has passed through the carbon dioxide collector 44 is discharged from the smokestack 59. In the garbage incineration facility 1 shown in Fig. 8, in the same manner as described with reference to Fig. 1, the recirculating flue gas line 6 takes out, as the recirculating flue gas, part of the flue gas flowing through the flue gas passage 4 to supply the recirculating flue gas into the incinerator 3. Besides, the oxygen mixer 68 generates a high-concentration oxygen gas having a higher oxygen concentration than air by condensing oxygen from the surrounding air, and mixes the high-concentration oxygen gas with the recirculating flue gas flowing through the recirculating flue gas line 6. This can increase the amount of the recirculating flue gas taken out from the flue gas passage 4 as compared to the case where the recirculating flue gas is mixed with air. Accordingly, it is possible to easily reduce the amount of the flue gas discharged from the smokestack 59.

### Eighth Embodiment

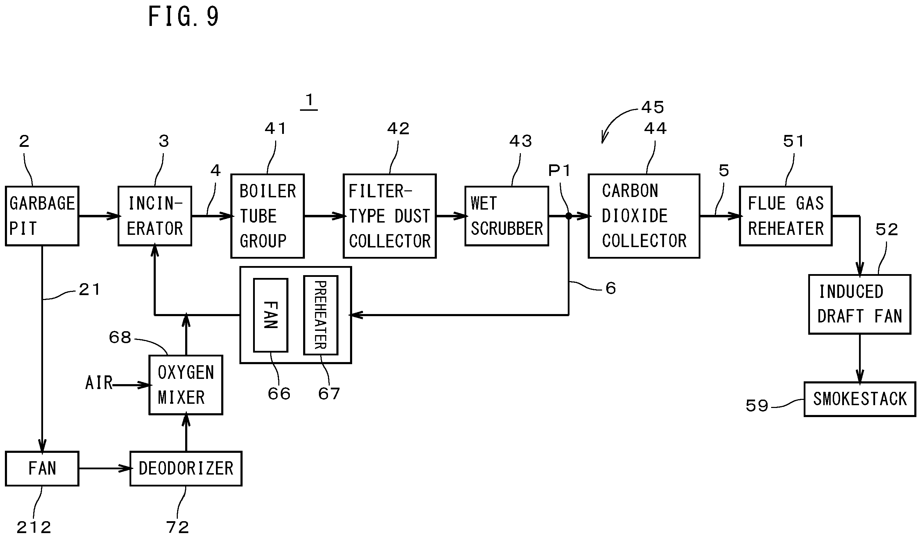

Fig. 9 is a block diagram showing a garbage incineration facility 1 according to an eighth embodiment of the present invention. The garbage incineration facility 1 shown in Fig. 9 differs from the garbage incineration facility 1 shown in Fig. 8 in that the drawn-off gas that is drawn off from the garbage pit 2 is supplied through the drawn-off gas line 21 to the oxygen mixer 68. The drawn-off gas line 21 is provided with a fan 212 and a deodorizer 72 arranged in order from the garbage pit 2 toward the oxygen mixer 68. The oxygen mixer 68 receives the supply of the drawn-off gas deodorized by the deodorizer 72 and generates a high-concentration oxygen gas by condensing oxygen from at least part of the drawn-off gas. The high-concentration oxygen gas is mixed with the recirculating flue gas flowing through the recirculating flue gas line 6 and supplied to the incinerator 3. The remainder (mainly, nitrogen gas) of the drawn-off gas after the oxygen condensation in the oxygen mixer 68 is discharged to the outside of the garbage incineration facility 1. The oxygen mixer 68 may take in the surrounding air as necessary in cases such as where a necessary amount of high-concentration oxygen gas cannot be generated from only the drawn-off gas.

As described above, in the oxygen mixer 68 shown in Fig. 9, the drawn-off gas line 21 through which the gas in the garbage pit 2 is drawn off as the drawn-off gas is provided to appropriately maintain the garbage pit 2 under a negative pressure. Besides, the high-concentration oxygen gas is generated from at least part of the drawn-off gas and mixed with the recirculating flue gas to be used as the gas for combustion in the incinerator 3. This can increase the amount of the recirculating flue gas taken out from the flue gas passage 4 and reduces the amount of the flue gas discharged from the smokestack 59.

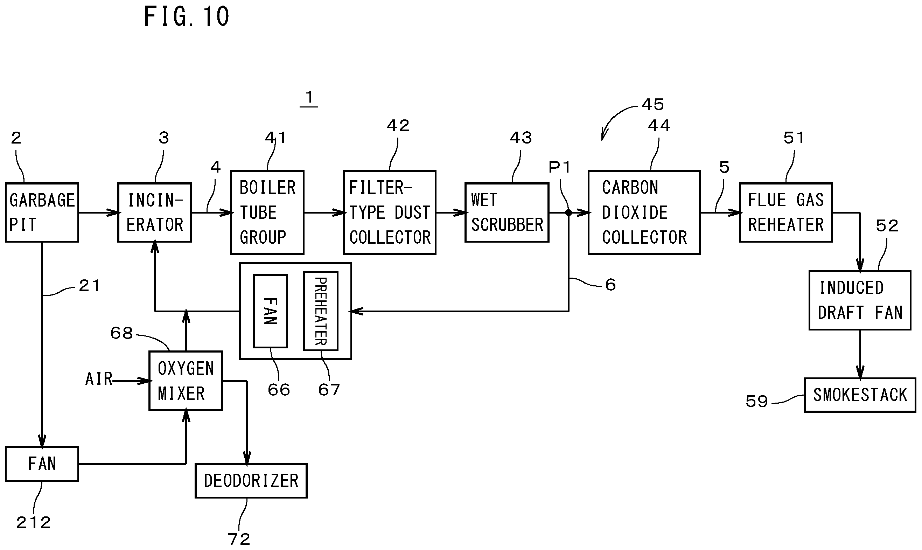

The deodorizer 72 does not necessarily have to be provided in the drawn-off gas line 21, and may be provided in an exhaust passage that extends from the oxygen mixer 68 to the outside as shown in Fig. 10. In the oxygen mixer 68 shown in Fig. 10, a high-concentration oxygen gas is generated by condensing oxygen contained in the drawn-off gas (and air) and mixed with the recirculating flue gas. Meanwhile, the remainder of the drawn-off gas, i.e., the remaining gas after the oxygen condensation, is discharged via the deodorizer 72 to the outside. The configuration in Fig. 10 lowers the flow rate of the gas flowing through the deodorizer 72. Accordingly, it is possible to use the small-sized deodorizer 72 and to reduce the manufacturing cost of the garbage incineration facility 1.

### Ninth Embodiment

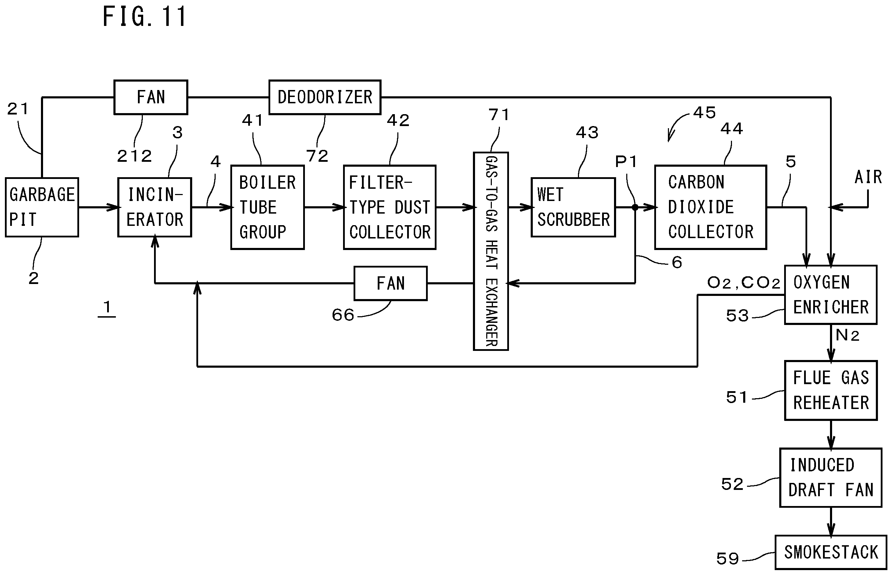

Fig. 11 is a block diagram showing a garbage incineration facility 1 according to a ninth embodiment of the present invention. In the garbage incineration facility 1 shown in Fig. 11, an oxygen enricher 53 is provided between the carbon dioxide collector 44 and the flue gas reheater 51 in the processed gas line 5. The processed gas line 5 branches off into two lines at the oxygen enricher 53, one of the lines being connected to the recirculating flue gas line 6 and the other line being connected to the smokestack 59 via, for example, the flue gas reheater 51. The oxygen enricher 53 is further connected to the drawn-off gas line 21. The flue gas passage 4 and the recirculating flue gas line 6 are provided with a gas-to-gas heat exchanger 71. The other configuration is the same as that shown in Fig. 1, and constituent elements that are identical to those in Fig. 1 are given the same reference signs.

The gas-to-gas heat exchanger 71 exchanges heat between the flue gas flowing from the dust collector 42 toward the wet scrubber 43 in the flue gas passage 4 and the recirculating flue gas flowing through the recirculating flue gas line 6. Thus, in the garbage incineration facility 1 in which the discharge position P1 is provided downstream of the wet scrubber 43, it is possible to efficiently heat the recirculating flue gas whose temperature has been reduced by the wet scrubber 43. The other garbage incineration facilities 1 may also use the gas-to-gas heat exchanger 71. In the example shown in Fig. 11, the preheater is omitted from the recirculating flue gas line 6, but the preheater may be provided as necessary. Alternatively, the gas-to-gas heat exchanger 71 may be replaced by the preheater. In the case where the gas-to-gas heat exchanger 71 is not provided, the discharge position P1 may be provided between the dust collector 42 and the wet scrubber 43 as in the example shown in Fig. 7.

The oxygen enricher 53 shown in Fig. 11 receives the supply of the processed gas from the carbon dioxide collector 44. In the drawn-off gas line 21, the drawn-off gas is drawn off from the garbage pit 2 by the fan 212 and supplied via the deodorizer 72 to the oxygen enricher 53. If necessary, the outside air may be supplied to the oxygen enricher 53. The oxygen enricher 53 is equipment that generates a high-concentration oxygen gas having a high oxygen concentration from the aforementioned gases and may, for example, be a PSA equipment, like the aforementioned oxygen mixer 68. In the present embodiment, the oxygen enricher 53 separates a nitrogen (N₂) gas from the aforementioned gases by adsorption and guides the nitrogen gas to the flue gas reheater 51, whereas it also guides the remainder (mainly an oxygen (O₂) gas and a carbon dioxide (CO₂) gas) of the aforementioned gases to the recirculating flue gas line 6 so that the remaining gas is mixed with the recirculating flue gas. The gas mixed with the recirculating flue gas is a high-concentration oxygen gas having a higher oxygen concentration than air and used as the gas for combustion (an oxidizing agent for combustion) in the incinerator 3. The gas guided to the flue gas reheater 51 (mainly, nitrogen gas) is guided via the induced draft fan 52 to the smokestack 59 and released into the atmosphere. Note that the oxygen enricher 53 may use an adsorbent that adsorbs oxygen. The same applies to the aforementioned oxygen mixer 68.

As described above, in the garbage incineration facility 1 shown in Fig. 11, the oxygen enricher 53 is provided in the processed gas line 5. The oxygen enricher 53 serves as an oxygen mixer that generates a high-concentration oxygen gas having a high oxygen concentration from the flue gas that has passed through the carbon dioxide collector 44, and mixes the high-concentration oxygen gas with the recirculating flue gas flowing through the recirculating flue gas line 6. By this way generating the high-concentration oxygen gas from the flue gas discharged from the incinerator 3, it is possible to further reduce the amount of the flue gas discharged from the smokestack 59 to the outside.

Moreover, the drawn-off gas line 21 through which the gas in the garbage pit 2 is drawn off as the drawn-off gas is provided to appropriately maintain the garbage pit 2 under a negative pressure. Then, the oxygen enricher 53 generates a high-concentration oxygen gas from at least part of the drawn-off gas and mixes the high-concentration oxygen gas with the recirculating flue gas flowing through the recirculating flue gas line 6. This can increase the amount of the recirculating flue gas taken out from the flue gas passage 4 as compared to cases such as where the drawn-off gas is mixed as-is with the recirculating flue gas or where the drawn-off gas is supplied as-is to the incinerator 3.

In the garbage incineration facility 1, the wet scrubber 43 is provided in the flue gas passage 4 between the dust collector 42 and the discharge position P1 for the recirculating flue gas. In the gas-to-gas heat exchanger 71, the recirculating flue gas is heated by heat exchange between the flue gas flowing upstream of the wet scrubber 43 in the flue gas passage 4 and the recirculating flue gas flowing through the recirculating flue gas line 6. In this way, the recirculating flue gas as which part of the flue gas is taken out (i.e., the gas having a lower flow rate than the flue gas flowing through the flue gas passage 4) is heated by using the high-temperature flue gas flowing through the flue gas passage 4. This allows an efficient increase in the temperature of the recirculating flue gas.

In the garbage incineration facility 1 shown in Fig. 11, depending on the oxygen content or the like in the flue gas that has passed through the carbon dioxide collector 44, the flue gas may not be supplied to the oxygen enricher 53. In this case, the oxygen enricher 53 takes out the high-concentration oxygen gas from the drawn-off gas from the garbage pit 2 and the outside air and mixes the high-concentration oxygen gas with the recirculating flue gas. Meanwhile, the gas (mainly, nitrogen gas) other than the high-concentration oxygen gas is discharged to the flue gas reheater 51. The flue gas that has passed through the carbon dioxide collector 44 may, for example, be guided to the downstream side of the oxygen enricher 53 without passing through the oxygen enricher 53 and then mixed with the gas discharged from the oxygen enricher 53 (e.g., nitrogen gas). This configuration lowers the flow rate of the gas flowing through the oxygen enricher 53. Thus, it is possible to use the small-sized oxygen enricher 53 and to reduce the manufacturing cost of the garbage incineration facility 1.

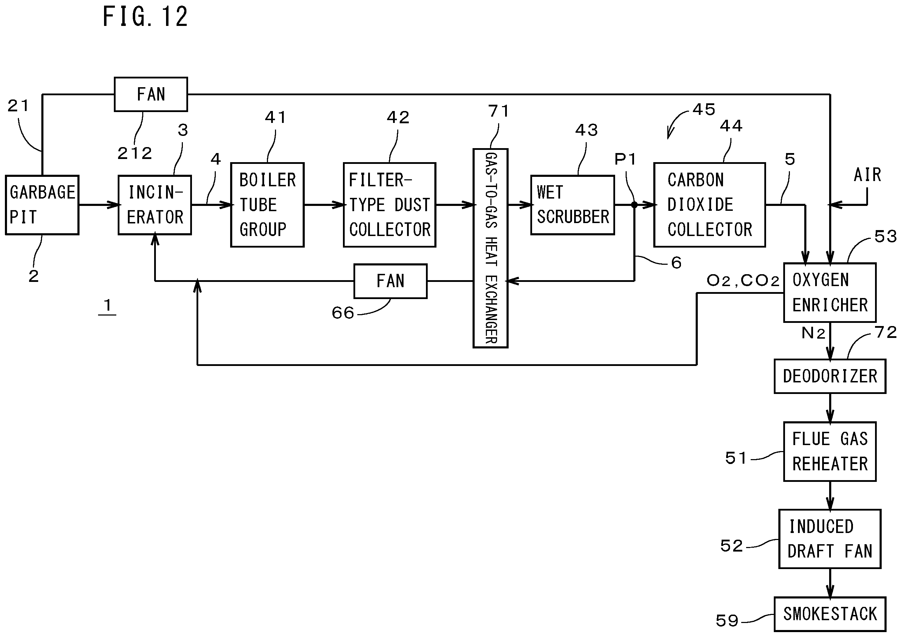

As shown in Fig. 12, the deodorizer 72 may be arranged between the oxygen enricher 53 and the flue gas reheater 51. In this case, the remaining gas after the oxygen condensation in the oxygen enricher 53 is discharged via the deodorizer 72 to the outside. The flue gas that has passed through the carbon dioxide collector 44 may, for example, be guided to the downstream side of the deodorizer 72 without passing through the oxygen enricher 53 and the deodorizer 72 and mixed with the gas discharged from the deodorizer 72 (e.g., nitrogen gas). This configuration lowers the flow rate of the gas flowing through the oxygen enricher 53 and the deodorizer 72. Thus, it is possible to use the small-sized oxygen enricher 53 and the small-sized deodorizer 72 and to reduce the manufacturing cost of the garbage incineration facility 1. Note that the deodorizer 72 may be omitted depending on the configuration of the garbage incineration facility 1.

### Tenth Embodiment

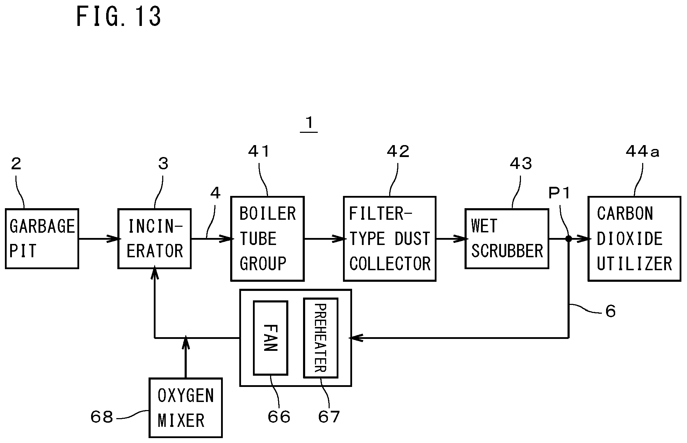

Fig. 13 is a block diagram showing a garbage incineration facility 1 according to a tenth embodiment of the present invention. In the garbage incineration facility 1 shown in Fig. 13, a carbon dioxide utilizer 44a is provided instead of the carbon dioxide collector 44 in the garbage incineration facility 1 shown in Fig. 8, and the flue gas reheater 51, the induced draft fan 52, and the smokestack 59 are omitted from the system. The other configuration is the same as that of the garbage incineration facility 1 shown in Fig. 8.

As shown in Fig. 13, the carbon dioxide utilizer 44a is provided downstream of the discharge position P1 in the flue gas passage 4. The carbon dioxide utilizer 44a is equipment that generates a predetermined product by using the flue gas. In one example, a methane gas or the like is generated from the flue gas by methanation. In another example, solid carbonate is generated from the flue gas by mineralization. Note that this product may further contain components other than carbon dioxide contained in the flue gas. In the garbage incineration facility 1 including the carbon dioxide utilizer 44a, it is possible to considerably reduce the amount of the flue gas discharged into the atmosphere. As in the case shown in Fig. 13, the other garbage incineration facilities 1 may also include the carbon dioxide utilizer 44a, instead of the carbon dioxide collector 44. They may also include both of the carbon dioxide collector 44 and the carbon dioxide utilizer 44a. In this case, for example, the carbon dioxide utilizer 44a generates a predetermined product by using carbon dioxide collected by the carbon dioxide collector 44.

The garbage incineration facilities 1 described above may be modified in various ways.

In the garbage incineration facilities 1 shown in Figs. 1 to 7, all of the processed gas that has passed through the carbon dioxide collector 44 may be supplied to the garbage pit 2 and/or the incinerator 3 or to the recirculating flue gas line 6, and the smokestack 59 may be omitted. In order to reduce the amount of the flue gas discharged to the outside in the garbage incineration facility 1, it is preferable to provide the processed gas line 5 by which at least part of the flue gas that has passed through the carbon dioxide collector 44 (the flue gas that has passed through the carbon dioxide collector 44 and the separation membrane 51a in the case where there is the separation membrane 51a) is supplied as the processed gas to the garbage pit 2 and/or the incinerator 3 or to the recirculating flue gas line 6.

In the case where the processed gas flowing through the processed gas line 5 (i.e., the flue gas that has passed through the carbon dioxide collector 44) has an oxygen concentration that is sufficiently higher than air, the processed gas line 5 may be connected as an oxygen mixer to the recirculating flue gas line 6. In this case, the recirculating flue gas mixed with the processed gas is supplied to the incinerator 3.

The drawn-off gas line 21 may be connected at an arbitrary position to the garbage pit 2.

As described above, in the garbage incineration facilities 1 according to the first to tenth embodiments, almost no air is supplied from the outside into the incinerator 3 except for, for example, the air taken into the incinerator 3 with garbage or the air flowing into the incinerator 3 via the feed hopper 31. In particular, in the garbage incineration facilities 1 shown in Figs. 8 to 13 and the like, almost all of the gas for combustion that is supplied via the gas pipe into the incinerator 3 is the recirculating flue gas supplied from the recirculating flue gas line 6 into the incinerator 3, i.e., the recirculating flue gas mixed with the high-concentration oxygen gas. Thus, it is possible to considerably reduce the amount of the flue gas discharged from the smokestack 59 in the garbage incineration facilities 1. Meanwhile, depending on the design of the garbage incineration facility 1, air may be supplied as part of the gas for combustion via the gas pipe into the incinerator 3. In this case, in order to sufficiently reduce the amount of flue gas, it is preferable that a main gas of the gas for combustion that is supplied via the gas pipe into the incinerator 3 may be the recirculating flue gas mixed with the high-concentration oxygen gas. The main gas of the gas for combustion as used herein may refer to, for example, a gas that occupies 50% or more by volume of the gas for combustion. In this way, even in the case where air is supplied via the gas pipe into the incinerator 3 as part of the gas for combustion, it is preferable that the air may occupy less than 50% by volume of the gas for combustion. More preferably, the air may occupy less than 35% by volume and yet more preferably less than 20% by volume.

The incinerator 3 may be any incinerator other than a stoker incinerator (e.g., a fluidized bed incinerator or a kiln incinerator). The garbage incineration facility 1 may be used as a waste incineration facility for incinerating industrial waste or non-industrial waste other than garbage. The technique for using the dehydrator (separation membrane 65) to remove water from the recirculating flue gas and the technique for using the separation membrane 51a to remove water from the flue gas that is immediately after having passed through the flue gas treatment equipment 45 may be used independently.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: garbage incineration facility
- 2: garbage pit
- 3: incinerator
- 4: flue gas passage
- 5, 5a: processed gas line
- 6: recirculating flue gas line
- 21: drawn-off gas line
- 22: platform
- 33: primary combustion chamber
- 34: secondary combustion chamber
- 42: dust collector
- 43: wet scrubber
- 44: carbon dioxide collector
- 44a: carbon dioxide utilizer
- 45: flue gas treatment equipment
- 51a: separation membrane (for processed gas)
- 53: oxygen enricher
- 65: separation membrane (for recirculating flue gas)
- 67: preheater
- 68: oxygen mixer (for recirculating flue gas)
- 72: deodorizer
- 91: accumulated layer of garbage
- 211: oxygen mixer (for drawn-off gas)
- 221, 222: door
- P1: discharge position

## Claims

1. A waste incineration facility comprising:
an incinerator that incinerates waste;
a flue gas passage through which a flue gas discharged from said incinerator flows;
a dust collector provided in said flue gas passage;
a recirculating flue gas line that is connected to a discharge position located downstream of said dust collector in said flue gas passage and that takes out, as a recirculating flue gas, part of said flue gas flowing through said flue gas passage to supply said recirculating flue gas into said incinerator; and
an oxygen mixer that mixes said recirculating flue gas flowing through said recirculating flue gas line with a high-concentration oxygen gas that has a higher oxygen concentration than air.

2. The waste incineration facility according to claim 1, wherein
said recirculating flue gas that has been mixed with said high-concentration oxygen gas serves as a main gas of a gas for combustion that is supplied via a gas pipe into said incinerator.

3. The waste incineration facility according to claim 1, wherein
said recirculating flue gas line is connected to a primary combustion chamber and/or a secondary combustion chamber of said incinerator, and
said recirculating flue gas that has been mixed with said high-concentration oxygen gas is used as a gas for primary combustion and/or a gas for secondary combustion.

4. The waste incineration facility according to claim 1, further comprising:
a dehydrator that is provided in said recirculating flue gas line and that removes water from said recirculating flue gas.

5. The waste incineration facility according to claim 1, further comprising:
a preheater that is provided in said recirculating flue gas line and that heats said recirculating flue gas.

6. The waste incineration facility according to any one of claims 1 to 5, further comprising:
a wet scrubber that is provided between said dust collector and said discharge position in said flue gas passage and that supplies a liquid containing water to said flue gas to remove a predetermined component from said flue gas,
wherein said recirculating flue gas flowing through said recirculating flue gas line is heated by heat exchange with said flue gas flowing upstream of said wet scrubber in said flue gas passage.

7. The waste incineration facility according to any one of claims 1 to 5, further comprising:
a waste pit that reserves waste that is before being disposed of into said incinerator; and
a drawn-off gas line through which a gas in said waste pit is drawn off as a drawn-off gas,
wherein said oxygen mixer generates said high-concentration oxygen gas from at least part of said drawn-off gas and mixes said high-concentration oxygen gas with said recirculating flue gas flowing through said recirculating flue gas line.

8. The waste incineration facility according to claim 7, wherein
said oxygen mixer generates said high-concentration oxygen gas by condensing oxygen contained in said drawn-off gas and discharges a remainder of said drawn-off gas via a deodorizer to an outside.

9. The waste incineration facility according to any one of claims 1 to 5, further comprising:
a carbon dioxide collector that is provided downstream of said discharge position in said flue gas passage and that collects carbon dioxide from said flue gas; and
a processed gas line by which at least part of said flue gas that has passed through said carbon dioxide collector is mixed with said recirculating flue gas flowing through said recirculating flue gas line.

10. The waste incineration facility according to claim 9, wherein
said oxygen mixer is provided in said processed gas line and generates said high-concentration oxygen gas from said flue gas that has passed through said carbon dioxide collector, and mixes said high-concentration oxygen gas with said recirculating flue gas flowing through said recirculating flue gas line.

11. The waste incineration facility according to any one of claims 1 to 5, further comprising:
a carbon dioxide utilizer that is provided downstream of said discharge position in said flue gas passage and that generates a predetermined product by using said flue gas.

12. The waste incineration facility according to any one of claims 1 to 5, further comprising:
a waste pit that reserves waste that is before being disposed of into said incinerator;
a carbon dioxide collector that is provided downstream of said discharge position in said flue gas passage and that collects carbon dioxide from said flue gas; and
a processed gas line by which at least part of said flue gas that has passed through said carbon dioxide collector is supplied as a processed gas to said waste pit and/or said incinerator.

13. The waste incineration facility according to claim 12, further comprising:
a drawn-off gas line through which a gas in said waste pit that has received supply of said processed gas is drawn off as a drawn-off gas and supplied into said incinerator; and
another oxygen mixer that mixes said drawn-off gas flowing through said drawn-off gas line with a gas that has a higher oxygen concentration than air.

14. The waste incineration facility according to claim 12, further comprising:
a drawn-off gas line through which a gas in said waste pit that has received supply of said processed gas is drawn off as a drawn-off gas,
wherein said drawn-off gas is mixed with said recirculating flue gas flowing through said recirculating flue gas line.

15. The waste incineration facility according to claim 12, further comprising:
a drawn-off gas line through which a gas in said waste pit that has received supply of said processed gas is drawn off as a drawn-off gas,
wherein said oxygen mixer generates said high-concentration oxygen gas from at least part of said drawn-off gas and mixes said high-concentration oxygen gas with said recirculating flue gas flowing through said recirculating flue gas line.

16. The waste incineration facility according to claim 12, wherein
said processed gas is supplied into a lower portion of said waste pit from said processed gas line and is supplied into said incinerator after having passed through an accumulated layer of waste in said waste pit.

17. The waste incineration facility according to claim 12, wherein
said waste pit is connected to a platform that has a double-door structure.

18. The waste incineration facility according to any one of claims 1 to 5, further comprising:
flue gas treatment equipment that is provided downstream of said dust collector in said flue gas passage and that supplies a liquid containing water to said flue gas to remove a predetermined component from said flue gas; and
a separation membrane that removes water from said flue gas that is immediately after having passed through said flue gas treatment equipment.
